# EUROPÄISCHE PATENTSCHRIFT

(11) **EP 3 527 511 B1**
(45) Veröffentlichungstag und Bekanntmachung des Hinweises auf die Patenterteilung: **30.08.2023**
(21) Anmeldenummer: 19156095.2
(22) Anmeldetag: 08.02.2019
(51) Int. Cl.: B65G 47/24, A23N 4/06, A23N 4/14, A23P 20/25, A23N 4/08, A23N 15/00

(54) **VERFAHREN ZUR AUSRICHTUNG UND ZUM BEARBEITEN EINER FRUCHT**
METHOD FOR ALIGNING AND FOR PROCESSING FRUIT
PROCÉDÉ D'ORIENTATION ET DE TRAITEMENT D'UN FRUIT

(30) Priorität: 19.02.2018 DE 102018103673
(43) Veröffentlichungstag der Anmeldung: 21.08.2019
(73) Patentinhaber: Fraunhofer-Gesellschaft zur Förderung der angewandten Forschung e.V., 80686 München (DE)
(72) Erfinder: Weyrauch, Thomas, 01237 Dresden (DE); Boye, André, 01156 Dresden (DE)
(74) Vertreter: Gottfried, Hans-Peter

(56) Entgegenhaltungen:
- DE-A1- 2 400 726
- DE-U1-202016 106 893
- US-A- 2 293 121
- US-A- 2 935 176
- US-A- 3 200 968
- US-A- 3 653 418
- US-A- 3 952 646

## Beschreibung

Die Erfindung betrifft ein Verfahren zur Ausrichtung und zum Bearbeiten wenigstens einer kugelförmigen, kegelförmigen oder ovalen Frucht mit zumindest einer ersten Inhomogenität oder mit einer ersten und einer zweiten, der ersten gegenüber angeordneten Inhomogenität, wobei die Frucht in einer Ausrichtaufnahme aufgenommen und von unten bezogen auf eine Normalposition durch ein Fluid angeströmt wird, wobei das strömende Fluid ein einseitig im Bereich der Inhomogenität auf die Frucht wirkendes Drehmoment hervorruft, das die Frucht in Richtung des geringsten Strömungswiderstands so weit dreht, dass die Frucht in einer Position in der Ausrichtaufnahme zur Ruhe kommt, in der die erste oder die zweite Inhomogenität nach oben weist.

Verfahren und Vorrichtungen zur Ausrichten von Früchten sind aus dem Stand der Technik bekannt. So befasst sich die Druckschrift DE 1 187 847 B mit der Ausrichtung von Birnen, die wegen ihrer ungleichmäßigen sowie sortenabhängig sehr unterschiedlichen Form als besondere Herausforderung angesehen werden. Diese werden dazu von außen an ihrem größten Druckmesser gegriffen, bevorzugt in einer V-förmigen Rinne, so dass sich die Spitze mit dem Stiel gemäß der wirkenden Schwerkraft nach unten ausrichtet. Die Druckschrift DE 1 189 310 B befasst sich ebenfalls mit der Verarbeitung bzw. der vorausgehenden Ausrichtung von Birnen, die dazu in sich gegenüberstehenden hohlkegelförmigen Öffnungen positioniert werden. Zur Ausrichtung einer kugelförmigen oder ovalen Frucht sind solche Verfahren nicht geeignet.

Auch das Ausrichten und Verarbeiten von Äpfeln als Beispiel für kugelförmige Früchte mit Vertiefungen ist Gegenstand von Erfindungen. Die Druckschriften DE 1 757 519 C und DE 1 757 573 C3 offenbaren zur Ausrichtung neben Greifdornen, die nicht exakt ausgerichtete Früchte aussondern, auch Schalen, in die von unten ein Rädchen einragt. Dieses dreht den Apfel, bis eine Vertiefung in den Eingriffbereich des Rädchens gelangt, so dass es den Apfel nicht weiter drehen kann. Das Verfahren würde bei zu kleinen und leichten Früchten versagen, da zwischen diesen und dem Rädchen mangels Andruckkraft keine ausreichende Reibung entstehen könnte. Die Frucht könnte nicht gedreht werden.

Die Druckschrift DE 2 154 040 C3 beschreibt ein Verfahren zum Entstielen von Früchten, wozu die Früchte mit der Stielseite auf einer Walzenbahn aufliegen müssen, damit die Walzen die Stiele erfassen können. Um die Früchte zu drehen, sind verschiedene Maßnahmen beschrieben. Eine davon bedient sich eines Druckgases, das intermittierend auf die Früchte einwirkt. Die Bewegung der Früchte erfolgt dadurch aber nur zufällig, ein zielgerichtetes Ausrichten ist nicht möglich.

In der Druckschrift DE 2 400 726 A1 wird ein Verfahren zur Ausrichtung von Früchten in Vorbereitung eines nachfolgenden Verpackungsprozesses vorgeschlagen. Das Verfahren ist durch eine aufwändige Gestaltung gekennzeichnet. Ebenfalls mit der Verpackung von Gemüsefrüchten, speziell Gurken, befasst sich die Druckschrift DE 100 53 927 A1. Wegen ihrer starken Längsausdehnung stellen diese jedoch andere Anforderungen an die Ausrichtung als Früchte mit einer eher runden oder ovalen Form. Entsprechendes gilt für die Druckschrift DE 602 02 406 T2, die sich mit der Ausrichtung länglicher Erzeugnisse wie Bohnen, aber auch Pommes Frites befasst.

Auch das verlust- und schädigungsarme Entsteinen von Steinobst setzt zumeist eine Ausrichtung voraus. Die Druckschrift DE 20 2004 010 978 U1 sieht vor, die Früchte vor den Entsteinen mittels einer Leitfolie auszurichten.

Auch das Füllen von Lebensmittel ist aus dem Stand der Technik bekannt. Beschrieben wird es beispielsweise in der Druckschrift DE 10 2011 080 463 A1. Die zu füllenden Früchte werden durch Unterdruck in trichterförmigen Aufnahmen gehalten. Zur ausgerichteten Aufnahme der Lebensmittel werden jedoch keine Aussagen getroffen. Nach der Druckschrift DE 20 2006 004 409 U1, die ebenfalls das Füllen von Lebensmitteln zum Gegenstand hat, wird auf die Ausrichtung nicht gesondert eingegangen.

Gegenstand der Druckschrift US 2 293 121 A ist die Ausrichtung einer kugelförmigen Frucht mit einer Inhomogenität, im Speziellen einer Kirsche. Dazu wird diese in einer Aufnahme durch ein Fluid angeströmt. Am Ende kommt die Frucht mit der Inhomogenität nach unten in der Aufnahme zur Ruhe. Dazu ist ein Dorn erforderlich, auf dem die Frucht mit ihrer Inhomogenität aufsitzen soll und der zugleich der Zufuhr eines Fluids dient (Nippel 72). Die Frucht schwimmt in dem Fluid und innerhalb der Aufnahme auf, wird aber nicht vom dem Fluidstrahl unmittelbar getroffen. Dies hat zur Folge, dass die Frucht innerhalb der Aufnahme "tanzt". Innerhalb von einigen Sekunden sitzt sie dann mit ihrem Stielende auf dem Dorn auf. Damit ist die Kirsche mit dem Stielansatz nach unten ausgerichtet.

Eine weitere Art der Ausrichtung, bei der am Ende der Stiel an der Kirsche verbleibt und seitlich abragt, wird ebenfalls in der Druckschrift US 2 293 121 A beschrieben. Bei dieser Ausrichtung ist die Eindringtiefe des Dorns in die Aufnahme nicht entscheidend bzw. reicht eine geringere Eindringtiefe aus.

Das Verfahren ist konkret auf eine Kirsche ausgerichtet und kommt nicht ohne ein festes Ausrichtelement, den Dorn, aus. Das Dokument US 2 293 121 A offenbart die Merkmale des Oberbegriffs des Anspruchs 1.

Auch bei der Lösung, die in Druckschrift US 3 653 418 A beschrieben wird, ist die Ausrichtung einer Kohlsprosse mittels eines festen Ausrichtelements vorgesehen. Dieses ist jedoch als Vertiefung ausgebildet, in die ein abragender Teil des Kohlsprosse eingleitet. Dadurch wird die Kohlsprosse ausgerichtet, was jedoch nur durch den abragenden Teil möglich wird.

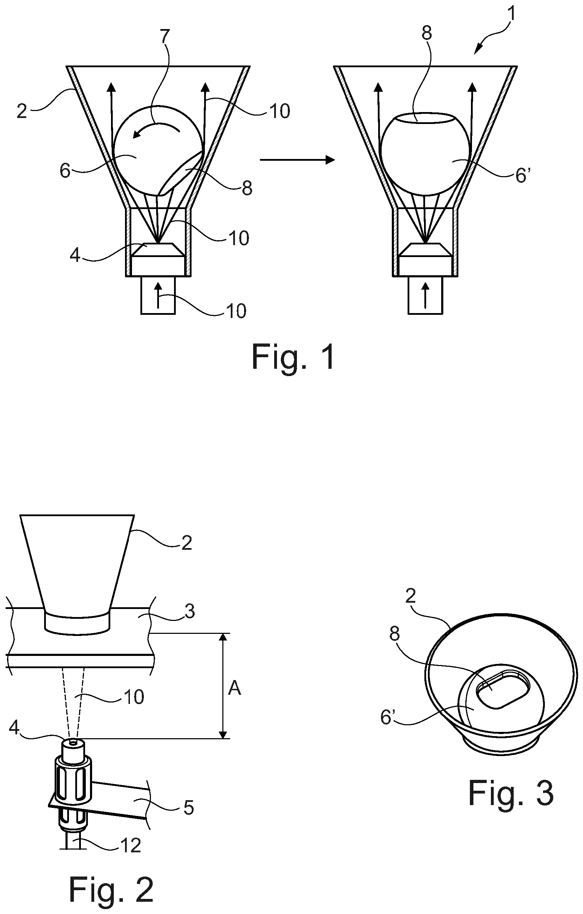

Die Druckschrift US 3 200 968 A sieht vor, dass die Frucht im Fluid schwimmt und sich beim Schwimmen dreht (vgl. Sp. 2, Z. 54 - 62). Die Strömung ist in einem Winkel (vgl. Sp. 2, Z. 34-37 und 69-70, Fig. 1) auf die Frucht gerichtet, in dem sie aus mehreren Düsen austritt. Durch das Schwimmen im Fluid wird die Frucht genässt.

Auch bei der Lösung nach Druckschrift US 2 935 176 A sind mehrere Öffnungen vorgesehen, aus denen das Fluid gegen die zu drehende Frucht strömt. Die Strömung tritt aus den Wänden der Aufnahme (vgl. Fig. 2) aus. Vor allem aber ist eine in der Aufnahme rotierende Strömung vorgesehen, die auch die Frucht in Drehung versetzt (vgl. Sp. 1, Z. 55-57, 69-71). Dies führt, wie in Sp. 2, Z. 56-65 beschrieben, zur Ausrichtung gemäß Masse in der Nahtebene. Eine abgeplattete Form, wie bei einer Aprikose, ist Voraussetzung für die Funktion.

Die Druckschrift US 3 952 646 B beschreibt eine Vorrichtung zum Entfernen der Stiele oder Kappen von Erdbeeren. Die Vorrichtung besteht aus einem Rahmen, der mehrere Förderrinnen, eine obere rotierende Trommel, eine untere rotierende Trommel und ein stationäres Kappungsmesser trägt. Die Erdbeeren werden zunächst in den Trögen abgelegt, die die Erdbeeren dann zur unteren rotierenden Trommel befördern. Die Erdbeeren werden dann einzeln in eine von mehreren zylindrischen Trägertaschen abgelegt, die in einem Abstand auf der unteren Drehtrommel angeordnet sind. Jede der Taschen steht mit einer Quelle für sequentiell angelegten Luftdruck in Verbindung. Die obere rotierende Trommel befindet sich in einem engen Abstand und parallel zur unteren rotierenden Trommel. In der oberen Trommel befindet sich eine Vielzahl von beabstandeten Öffnungen, die mit einer sequentiell angelegten Vakuumquelle in Verbindung stehen. Die beiden Trommeln werden in einem zeitlichen Verhältnis gedreht, so dass die Taschen und Öffnungen nacheinander miteinander in Verbindung treten, während gleichzeitig ein Druck und ein Vakuum nacheinander an die jeweiligen Taschen und Öffnungen angelegt werden. Die Kappe der Erdbeere wird so in dem Bereich zwischen der oberen Trommel und der zylindrischen Tasche gehalten, während der Körper der Erdbeere in der Tasche verbleibt. Die in dieser Position gehaltene Erdbeere passiert dann das Kappungsmesser und wird entkappt. Die Kappe der Erdbeere wird durch die Vakuumöffnung abgeführt, und der Erdbeerkörper wird auf ein Abfuhrband gelegt.

Derzeit ist keine Lösung zum vollautomatischen Ausrichten von Früchten mit einer Öffnung nach oben ohne ein festes Ausrichtelement bekannt. Auch die Verarbeitungsschritte Vereinzeln der Großgebinde, Vorsortieren, Ausrichten der einzelnen Früchte, wie z. B. Kirschpaprika, Spitzpaprika, Peperoni oder Oliven werden bislang manuell ausgeführt. Das Beschicken der Vorrichtung zum Füllen wenigstens einer Frucht, wie sie zur Herstellung gefüllter Früchte zur Antipastiherstellung genutzt wird, erfolgt mangels geeigneter Verfahren bislang manuell. Eine solche Vorrichtung wird auch als Befüllanlage bezeichnet und ist insbesondere zum Füllen mit pastösen Massen vorgesehen.

Aufgabe der vorliegenden Erfindung ist es daher, ein Verfahren zum einfachen und schnellen Ausrichten von kugelförmigen, kegelförmigen oder ovalen Früchten mit einer Öffnung nach oben ohne ein festes Ausrichtelement anzubieten, um die derart ausgerichteten Früchte danach bearbeiten oder mit einem weiteren Lebensmittel füllen zu können.

Die Aufgabe wird gelöst durch ein Verfahren zur Ausrichtung wenigstens einer kugelförmigen, kegelförmigen oder ovalen Frucht mit zumindest einer ersten Inhomogenität oder mit einer ersten und einer zweiten, der ersten gegenüber angeordneten Inhomogenität. Solche Inhomogenitäten sind in erster Linie durch eine Bearbeitung der Frucht, wie Entfernen des Stiels und Kerngehäuses, z. B. bei Kirschpaprika, oder des Steins, z. B. bei Oliven, bedingt und stellen dadurch eine Öffnung in der Frucht her. Es kann sich aber auch um natürliche Inhomogenitäten handeln, sofern diese gegenüber der übrigen Oberfläche der Frucht eine ausreichend große strömungstechnische Abweichung hervorzurufen vermögen.

Die Frucht wird in einer Ausrichtaufnahme aufgenommen, von unten, bezogen auf eine Normalposition, bevorzugt in senkrechter Richtung, durch ein Fluid angeströmt, so dass sie geringfügig von der Innenwand der Ausrichtaufnahme abhebt, zumindest aber die schwerkraftbedingte Haftreibung zwischen Frucht und Ausrichtaufnahme aufgehoben wird. Dadurch kann sich die Frucht in der Ausrichtaufnahme leicht drehen. Wegen der vorhandenen Inhomogenität oder der beiden Inhomogenitäten dreht sich die Frucht in dem Fluidstrom in Richtung des geringsten Strömungswiderstands so weit, dass die Frucht in einer Position in der Ausrichtaufnahme vorliegt, in der die erste oder die zweite Inhomogenität, wenn vorhanden, nach oben weist. Die Inhomogenität kann durch eine vorherige Bearbeitung hervorgerufen worden sein, z. B. durch Entkernen, oder bereits natürlicherweise vorhanden sein. Im letzteren Fall kann die unbearbeitete Frucht zunächst ausgerichtet werden, um die vorgesehenen Bearbeitungsschritte nacheinander in der vorliegenden Ausrichtung vornehmen zu können.

Der Fluidstrom ruft ein einseitig im Bereich der Inhomogenität auf die Frucht wirkendes Drehmoment hervor. Die Frucht dreht sich dadurch in Richtung des geringsten Strömungswiderstands so weit, dass sie in der erwünschten Position, mit der Inhomogenität nach oben, in der Ausrichtaufnahme zur Ruhe kommt. Dann kann die vorgesehene Manipulation erfolgen, die Frucht beispielsweise gefüllt, entkernt oder anderweitig bearbeitet werden.

Solange also eine Inhomogenität gegenüber der vertikalen Normalposition seitlich gelegen ist, wirkt dort der einseitige, seitliche Strömungswiderstand auf die Frucht und leitet das Drehmoment in diese ein. Dieses verringert sich und wirkt nicht weiter, sobald die Inhomogenität den Bereich der seitlichen Umströmung zwischen der Oberfläche der Frucht und der inneren Oberfläche der Ausrichtaufnahme, damit den Einflussbereich des strömenden Fluids, verlässt. Dann kommt die Drehung der Frucht zum Stillstand, die gewünscht Position ist erreicht.

Als besonders vorteilhaft hat sich eine Ausrichtaufnahme erwiesen, die sich trichterförmig nach oben in Bezug auf eine vertikale Normalposition öffnet. Weiterhin strömt bei einer bevorzugten Ausgestaltung des erfindungsgemäßen Verfahrens das Fluid durch eine unterhalb der Ausrichtaufnahme und von dieser beabstandeten Düse von unten in Bezug auf eine vertikale Normalposition gegen die Ausrichtaufnahme.

Diese weist unten eine Öffnung auf, damit das Fluid dort einströmen kann. Als Fluid ist, insbesondere für kleine und leichte Früchte, Luft oder ein anderes Gas vorgesehen.

Nach der Erfindung ist die nach oben weisende Inhomogenität der Frucht eine Öffnung, wobei die Öffnung beispielsweise durch das Entsteinen oder das Entfernen des Kerngehäuses entstanden ist. Die Frucht wird in einem ersten Schritt mit der Öffnung nach oben ausgerichtet und in einem zweiten Schritt bearbeitet, wobei die Öffnung gefüllt wird. Zum Füllen sind vor allem pastöse Massen vorgesehen, aber auch einzelne Elemente wie z. B. Mandeln. Nach der Erfindung wird die Frucht vor dem Bearbeiten oder Füllen mit der wenigstens einen Öffnung nach oben ausgerichtet. Dies erfolgt durch ein Verfahren gemäß der vorliegenden Erfindung, wie es zuvor beschrieben wurde. Die Öffnung der Frucht kann dabei die Inhomogenität ausbilden, die einen erhöhten Strömungswiderstand hervorruft.

Das erfindungsgemäße Verfahren kann teilweise auf einer Vorrichtung zur Ausrichtung wenigstens einer Frucht mit zumindest einer ersten Inhomogenität oder mit einer ersten und einer zweiten, der ersten gegenüber angeordneten Inhomogenität ausgeführt werden. Eine Ausrichtaufnahme ist zur Aufnahme der wenigstens einen Frucht in im Wesentlichen senkrechter Richtung ausgeführt, so dass die Wirkung der Schwerkraft genutzt wird, um die Frucht in der Ausrichtaufnahme zu halten. Eine Düse ist mit einer Zuleitung für ein Fluid verbunden und zur Abgabe des Fluids in Richtung der Unterseite der Ausrichtaufnahme ausgeführt.

Die Ausrichtaufnahme ist bevorzugt als ein nach oben öffnender Trichter ausgebildet. Die Düse ist im Bereich unterhalb der Ausrichtaufnahme angeordnet und auf diese ausgerichtet, sodass die Ausrichtaufnahme von unten durch das Fluid angeströmt werden kann. Als Fluid ist bevorzugt Luft oder ein anderes Gas vorgesehen ist.

Im Interesse einer hohen Effektivität der Vorrichtung können mehrere Ausrichtaufnahmen und die zugehörigen Düsen jeweils in einer Reihe nebeneinander, einer Aufnahmenreihe, angeordnet sein. Eine noch höhere Effektivität kann mit einer Vorrichtung erzielt werden, bei der mehrere Aufnahmenreihen, gebildet durch Reihen von Ausrichtaufnahmen, zu oder auf einem endlosen Band aneinandergereiht und über zwei Wellen bzw. die darauf angebrachten Scheiben gelegt sind. Zumindest eine der Wellen ist angetrieben und bewegt das Band weiter, so dass eine Reihe von Ausrichtaufnahmen nach der anderen mit Früchten versehen werden kann, die dann in den Ausrichtaufnahmen ausgerichtet werden, wenn die jeweilige Reihe von Ausrichtaufnahmen über die Düsenreihe befördert wird. Bevorzugt ist nur eine Reihe von Düsen vorgesehen, jedoch können, um beim Ausrichten Taktzeit zu sparen, auch mehrere Reihen von Düsen vorgesehen sein.

Eine Beispiel sieht eine Zuführ- und Vereinzelungseinrichtung vor. Deren Vereinzelungsbahnen enden bei dem Beispiel über jeweils einer Ausrichtaufnahme und entlassen jeweils eine Frucht in die Ausrichtaufnahme. Das erfindungsgemäße Verfahren kann teilweise auf einer Vorrichtung zum Bearbeiten wenigstens einer Frucht, die eine Vorrichtung zur Ausrichtung einer Frucht gemäß vorstehender Beschreibung umfasst, ausgeführt werden. Unmittelbar nach der Ausrichtung und bevorzugt ohne Entnahme der Frucht aus der Ausrichtaufnahme und ohne eine sonstige Manipulation kann das Füllen als ein oder mehrere nachfolgende Arbeitstakte erfolgen.

Als Vorteile der vorliegenden Erfindung sind das berührungsloses Ausrichten und ein geringer Platzbedarf zu nennen. Ein schnelles Ausrichten mit Taktzeiten unter 1 s und der Verzicht auf komplizierte Mechanismen sind ebenfalls vorteilhaft. Das berührungslose Ausrichten der Früchte mittels reiner Luftströmung ermöglicht zudem, dass natürliche Schwankungsbreite der Früchte in Form und Größe kompensiert werden. Zudem ist die vorgeschlagene Anlage beliebig erweiterbar.

Anhand der Beschreibung von Ausführungsbeispielen und ihrer Darstellung in den zugehörigen Zeichnungen wird die Erfindung nachfolgend näher erläutert. Es zeigen:
Fig. 1: eine geschnittene Seitenansicht einer Ausrichtaufnahme einer Vorrichtung zur erfindungsgemäßen Ausrichtung einer Frucht;
Fig. 2: eine perspektivische Seitenansicht einer Ausrichtaufnahme einer Vorrichtung zur erfindungsgemäßen Ausrichtung einer Frucht mit Düse;
Fig. 3: eine perspektivische Ansicht einer Ausrichtaufnahme einer Vorrichtung zur erfindungsgemäßen Ausrichtung mit einer Frucht;
Fig. 4: eine perspektivische Ansicht einer Mehrfachvorrichtung, umfassend Vorrichtungen zur erfindungsgemäßen Ausrichtung einer Frucht; und
Fig. 5: eine Detailansicht einer Mehrfachvorrichtung.

Fig. 1 zeigt eine geschnittene Seitenansicht einer Ausrichtaufnahme 2 einer Vorrichtung 1 zur Ausrichtung einer Frucht 6, 6`. Die erste Darstellung zeigt die Frucht 6 in einer nicht ausgerichteten Position in der trichterförmigen Ausrichtaufnahme 2. Diese weist im unteren Bereich eine Düse 4 auf. Dieser entströmt ein Fluid 10, in der bevorzugten Ausführungsform Luft, das zwischen der Frucht 6 und der Innenwand der Ausrichtaufnahme 2 in Pfeilrichtung nach oben aus der Ausrichtaufnahme 2 abströmt.

Die Frucht 6 weist eine Inhomogenität, die Öffnung 8 auf. Diese weist im Vergleich zu der übrigen, im Wesentlichen glatten Oberfläche der Frucht 6 einen höheren Strömungswiderstand auf. Hieraus resultiert eine Kraftwirkung auf die Öffnung 8, damit ein Drehmoment 7 in Pfeilrichtung. Die Frucht 6 wird damit gedreht, bis insbesondere der ringförmige Strömungsbereich zwischen der Innenfläche der Ausrichtaufnahme 2 und der Frucht 6 einen ausgeglichenen Strömungswiderstand aufweist. Dies ist der Fall, wenn in dem gesamten ringförmigen Strömungsbereich ausschließlich eine glatte, nicht von einer Inhomogenität unterbrochene Oberfläche der Frucht 6 vorliegt.

Eine solche Situation, wie sie sich zum Abschluss des erfindungsgemäßen Ausrichtvorgangs einstellt, zeigt die zweite Darstellung der Fig. 1, auf der rechten Seite. Dabei weist die Öffnung 8 der ausgerichteten Frucht 6` zum Abschluss des erfindungsgemäßen Ausrichtvorgangs nach oben. Infolgedessen bestehen über den gesamten im wesentlichen ring- bzw. kegelstumpfförmigen Bereich, in dem sich die Oberfläche der Frucht 6` und die innere Oberfläche der Ausrichtaufnahme 2 am nächsten kommen, und der den Durchlass für das Fluid 10 zwischen Frucht 6` und Ausrichtaufnahme 2 bildet, gleichmäßige Strömungsverhältnisse. Die Frucht 6` wird daraufhin nicht weiter gedreht, da sie ihre Ziellage, die Öffnung 8 weist nach oben, erreicht hat. In dieser Position könnte die Frucht 6` mit einer pastösen Masse oder einem anderen Element befüllt werden, was das weitere Ziel der erfindungsgemäßen Ausrichtung ist.

Fig. 2 zeigt eine Seitenansicht einer Ausrichtaufnahme 2 einer Vorrichtung 1 zur Ausrichtung einer Frucht mit einer Düse 4. Es hat sich nämlich als vorteilhaft erwiesen, wenn die Düse 4 um den Abstand A von der Unterseite der Ausrichtaufnahme 2 entfernt angeordnet wird. Dann strömt das Fluid 10 frei gegen die Unterseite der Ausrichtaufnahme 2.

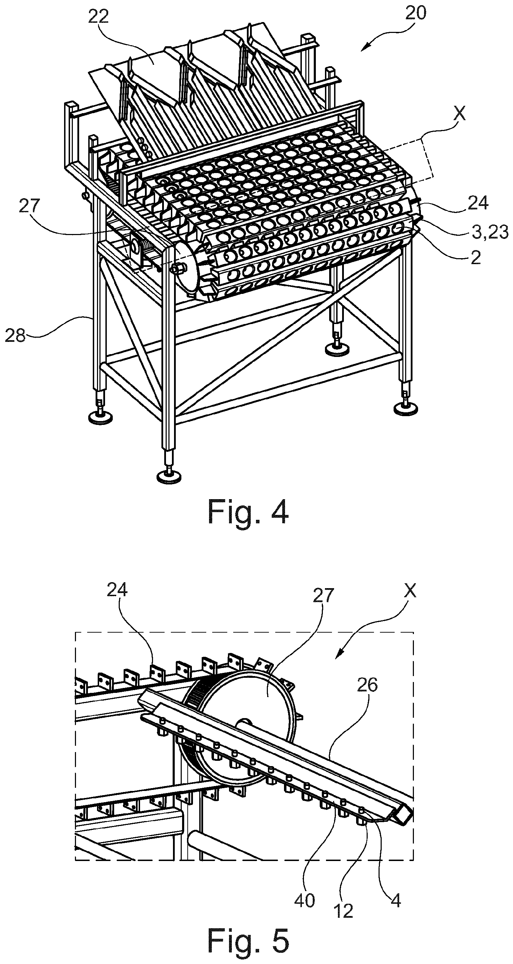

Die Düse 4 ist gemäß der Darstellung an einer Düsenleiste 5 befestigt, während die Ausrichtaufnahme 2 auf einer Halteleiste 3 angeordnet ist. Die Düsenleiste 5 und die Halteleiste 3 ermöglichen es, mehrere Düsen 4 bzw. Ausrichtaufnahmen 2 nebeneinander anzuordnen, um die Effektivität der Vorrichtung zu erhöhen. Eine derartige Ausführungsform ist mit einer Mehrfachvorrichtung 20 in den Figuren 4 und 5 näher dargestellt und beschrieben.

Fig. 3 zeigt mit Blick von oben eine perspektivische Ansicht einer Ausrichtaufnahme 2 einer Vorrichtung 1 zur Ausrichtung einer Frucht 6`, die bereits ausgerichtet mit der Öffnung 8 nach oben vorliegt. In dieser Position ist die Frucht 6` bereit, eine Füllung aufzunehmen. Dies erfolgt insbesondere dann, wenn eine Vorrichtung zum Füllen wenigstens einer Frucht um die Vorrichtung zur Ausrichtung einer Frucht ergänzt ist.

Fig. 4 zeigt eine perspektivische Ansicht einer Mehrfachvorrichtung 20, umfassend Vorrichtungen zur Ausrichtung einer Frucht. Die Mehrfachvorrichtung 20 umfasst eine Zuführ- und Vereinzelungseinrichtung 22, auf die die Früchte 6 (vergleiche Figuren 1 bis 3) ungeordnet aufgegeben werden können und mittels der Zuführ- und Vereinzelungseinrichtung 22 den einzelnen Ausrichtaufnahmen 2, die nebeneinander auf einer Halteleiste 3 angeordnet sind und zusammen eine Aufnahmenreihe 23 bilden, zugeführt werden.

Die Aufnahmereihen 23 sind auf einem umlaufenden, endlosen Band 24 angeordnet, das über Scheiben 27 gelegt ist. Ein Gestell 28 dient der Aufnahme der einzelnen Komponenten der Mehrfachvorrichtung 20.

Fig. 5 zeigt eine Detailansicht X einer Mehrfachvorrichtung 20 aus Fig. 4. Die Aufnahmenreihen 23 aus Fig. 4 sind von dem Band 24 entfernt. Dadurch wird der Blick frei auf die Düsenreihe 40, die unter den Aufnahmenreihen 23 angeordnet ist. Die Düsenreihe 40 umfasst nebeneinander auf einer Düsenleiste 5 angeordnete Düsen 4 mit jeweils einer Zuleitung 12 für das Fluid. Erkennbar ist weiterhin, dass die Scheiben 27 auf Wellen 26 angeordnet sind, von denen wenigstens eine angetrieben ist, um den Umlauf des Bands 24 mit den hier nicht dargestellten Aufnahmenreihen 23 zu ermöglichen.

### Bezugszeichenliste

- 1: Vorrichtung zur Ausrichtung
- 2: Ausrichtaufnahme
- 3: Halteleiste
- 4: Düse
- 5: Düsenleiste
- 6, 6`: Frucht
- 7: Drehmoment
- 8: Öffnung, Inhomogenität
- 10: Luft, Fluid
- 12: Zuleitung Fluid
- 20: Mehrfachvorrichtung
- 22: Zuführ- und Vereinzelungseinrichtung
- 23: Aufnahmenreihe
- 24: Band
- 26: Welle
- 27: Scheibe
- 28: Gestell
- 40: Düsenreihe
- A: Abstand
- X: Detailansicht

## Patentansprüche

1. Verfahren zur Ausrichtung und zum Bearbeiten wenigstens einer kugelförmigen, kegelförmigen oder ovalen Frucht (6, 6') mit zumindest einer ersten Inhomogenität (8) oder mit einer ersten und einer zweiten, der ersten gegenüber angeordneten Inhomogenität (8), wobei die Frucht (6, 6') in einer Ausrichtaufnahme (2) aufgenommen und von unten bezogen auf eine Normalposition durch ein Fluid (10) angeströmt wird, wobei das strömende Fluid (10) ein einseitig im Bereich der Inhomogenität (8) auf die Frucht (6, 6') wirkendes Drehmoment (7) hervorruft, das die Frucht (6, 6') in Richtung des geringsten Strömungswiderstands so weit dreht, dass die Frucht (6, 6') in einer Position in der Ausrichtaufnahme (2) zur Ruhe kommt, in der die erste oder die zweite Inhomogenität (8) nach oben weist, **dadurch gekennzeichnet, dass** die nach oben weisende Inhomogenität (8) der Frucht (6, 6') eine Öffnung ist, wobei die Frucht (6, 6') in einem ersten Schritt mit der Öffnung nach oben ausgerichtet und in einem zweiten Schritt bearbeitet wird, wobei die Öffnung gefüllt wird.

2. Verfahren nach Anspruch 1, wobei sich die Ausrichtaufnahme (2) trichterförmig nach oben in Bezug auf eine vertikale Normalposition öffnet.

3. Verfahren nach Anspruch 1 oder 2, wobei das Fluid (10) durch eine unterhalb der Ausrichtaufnahme (2) und von dieser beabstandete Düse (4) von unten in Bezug auf eine vertikale Normalposition gegen die Ausrichtaufnahme (2) strömt.

4. Verfahren nach einem der vorherigen Ansprüche, wobei Luft als das Fluid (10) vorgesehen ist.

## Claims

1. A method for aligning and processing at least one spherical, conical or oval fruit (6, 6') with at least one first inhomogeneity (8) or with a first and a second inhomogeneity (8) arranged opposite the first, wherein the fruit (6, 6') is received in an alignment receptacle (2) and exposed to a flow of fluid (10) from below with respect to a normal position, the flowing fluid (10) producing a torque (7) acting on one side of the fruit (6, 6') in the region of the inhomogeneity (8), which rotates the fruit (6, 6') in a direction of least flow resistance to such an extent that the fruit (6, 6') comes to rest in the alignment receptacle (2) in a position in which the first or the second inhomogeneity (8) points upward, **characterized in that** the upward-pointing inhomogeneity (8) of the fruit (6, 6') is an opening, wherein the fruit (6, 6') is aligned such that the opening points upward in a first step and is processed in a second step, in which the opening is filled.

2. The method according to claim 1, wherein the alignment receptacle (2) opens upward with respect to a vertical normal position in a funnel-shaped manner.

3. The method according to claim 1 or 2, wherein the fluid (10) flows, through a nozzle (4) arranged below and spaced from the alignment receptacle (2), against the alignment receptacle (2) from below with respect to a vertical normal position.

4. The method according to any one of the preceding claims, wherein air is provided as the fluid (10).

## Revendications

1. Procédé d'orientation et de traitement d'au moins un fruit de forme sphérique, conique ou ovale (6, 6') avec au moins une première inhomogénéité (8) ou avec une première et une seconde inhomogénéité (8) disposée en face de la première, dans lequel le fruit (6, 6') est reçu dans un logement d'orientation (2) et parcouru par un fluide (10) par le bas par rapport à une position normale, dans lequel le fluide affluant (10) provoque un couple de rotation (7) agissant sur le fruit (6, 6') d'un côté dans la région de l'inhomogénéité (8), lequel tourne le fruit (6, 6') en direction de la résistance à l'écoulement la plus faible jusqu'à ce que le fruit (6, 6') vienne au repos dans une position dans le logement d'orientation (2), dans laquelle la première ou la seconde inhomogénéité (8) est tournée vers le haut, **caractérisé en ce que** l'inhomogénéité (8) tournée vers le haut du fruit (6, 6') est une ouverture, dans lequel le fruit (6, 6') est orienté dans une première étape avec l'ouverture vers le haut et traité dans une seconde étape, dans lequel l'ouverture est remplie.

2. Procédé selon la revendication 1, dans lequel le logement d'orientation (2) s'ouvre en forme d'entonnoir vers le haut par rapport à une position normale verticale.

3. Procédé selon la revendication 1 ou 2, dans lequel le fluide (10) s'écoule contre le logement d'orientation (2) à travers une buse (4) en dessous du logement d'orientation (2) et espacée de celui-ci par le bas par rapport à une position normale verticale.

4. Procédé selon une des revendications précédentes, dans lequel de l'air est prévu en tant que fluide (10).
